Europäisches Patentamt

European Patent Office

Office européen des brevets

(11) Publication number: **0 036 731**
**B1**

## (12) EUROPEAN PATENT SPECIFICATION

(45) Date of publication of patent specification: 10.09.86

(51) Int. Cl.⁴: **G 01 N 21/76**

(21) Application number: 81301079.0

(22) Date of filing: 16.03.81

(54) Method of monitoring light signals from liquid medium.

(30) Priority: 25.03.80 US 133943

(43) Date of publication of application:
30.09.81 Bulletin 81/39

(45) Publication of the grant of the patent:
10.09.86 Bulletin 86/37

(84) Designated Contracting States:
BE DE FR GB IT NL SE

(56) References cited:
FR-A-1 206 356
GB-A-1 142 705
GB-A-2 005 018
US-A-3 342 099

ANALYTICAL CHEMISTRY, vol. 49, no. 6, May
1977, WASHINGTON D.C. (US) J. HOLLAND et
al.: "Correction of right angle fluorescence
measurements for the absorption of excitation
radiation, pages 706-710

(73) Proprietor: MICROBICS CORPORATION
2233 Faraday, Suite B,
Carlsbad, California 92008 (US)

(72) Inventor: Greene, Malbone W.
1033 Alta Vista Drive
Vista California (US)
Inventor: Haunold, Otto
4823 Kelly Drive
Carlsbad California (US)

(74) Representative: Wotherspoon, Graham et al
FITZPATRICKS 4 West Regent Street
Glasgow G2 1RS Scotland (GB)

(56) References cited:
APPLIED SPECTROSCOPY, vol. 24, no. 6,
November 1970, COLUMBUS, OHIO (US) J.
GILL: "Measurement of relative quantum yields
of strongly absorbing solutions", pages 588-
590

REVUE DE PHYSIQUE APPLIQUEE, vol. 6, no. 3,
June 1971, PARIS (FR) G. NORMANDIN et al.:
"Construction d'un spectrofluorimètre corrigé
en analyse et en excitation", pages 147-153

## Description

### Field of the invention

This invention relates to a method of measuring the light output of a mixture of a fluid test medium and a light emitting substance responsive to the presence of a component or a condition of said fluid test medium.

### Background of the invention

A number of procedures for determining reaction rates or testing for a material or condition depend on monitoring the change of a light signal from a light emitting substance in contact with a test specimen to follow the reaction or to determine the characteristics or property of a test sample. For example, one such procedure involves the use of a suspension of luminescent microorganisms to detect the toxicity of water by monitoring the change in light output from the microorganism when contacted by the test water. Other such processes include scintillation techniques wherein a substance to be determined is tagged with a chemical or biological substance, such as a fluorescent material, which emits light in response to suitable activation and which light output is monitored as a measure of the quantity of the tagged substance. Yet another procedure involves monitoring the light output from a luciferase/luciferin adenosine triphosphate (ATP) system which light output is a measure of the quantity of ATP present.

A feature common to the above mentioned procedures is that the light signal originates from within a fluid medium which contains in addition to the test specimen, a light emitting substance. A problem arises when the fluid medium has characteristics which interfere with light transmission which can result in the attenuation of the light signal emitted from the medium. Such attenuation, normally caused by optical interfering characteristics of the medium such as turbidity or color, can result in incorrect results since the light signal is affected by factors in addition to the effects on the light signal as a result of the material or condition being measured. In ordinary photometry where the light signal is generated by a light source external to the medium containing the test specimen, optical interferences due to the color, turbidity or other characteristic of the medium can be determined by monitoring light transmittance from a known external source through the medium prior to initiation of the reaction being measured. The interfering optical characterstics of the medium can, therefore, be readily determined and the observed light readings adjusted to compensate for interference by the medium. However, in the case where the light emitting substance is disposed within the fluid medium, the determination of attenuatiom of the light signal is not so readily accomplished since the influence on the light signal due to the reaction or property being determined cannot normally be separated from the effect on the light signal by the interfering characteristics of the medium.

Thus, bioluminescent, chemiluminescent and other systems where the light emitting substance is admixed or disposed in a medium along with a substance or condition being tested are, therefore, deficient in those situations where the medium exhibits interfering optical characteristics which can attenuate the light signal independently of the effect on the light signal due to the property or characteristic being monitored.

### Summary of the invention

The present invention is directed to a method of determination of the light output from a mixture of a fluid test medium and a light emitting substance responsive to the presence of a component or condition of said fluid test medium which interacts with the light emitting substance to produce an observed light signal. The light signal thus produced is a measurement of the quantity or a property of the component or condition. More particularly, the present invention is directed to a method for compensating the observed light signal to substantially reduce the effect on such light signal of any interfering optical characteristics of the fluid medium which are independent of the effects on the light signal due to the substance or condition being measured. The method of the invention is defined in claim 1. False results due to effects on the light signal by factors other than the property being measured are substantially reduced, particularly in those cases where attenuation of the light signal due to an interfering optical characteristic of the medium is substantially greater than the effect on the light signal of the property being measured.

The present invention is useful for both gaseous and liquid media and for batch and continuous measurements and while it is used broadly in any technique involving monitoring light output where the light emitting substance is disposed in the medium containing the property or substance, the invention is particularly useful in procedures for assaying toxic substances utilizing the light output of luminous microorganisms as the measure of toxicity. Thus, the invention can be utilized to determine the toxicity in both gases, such as air, and liquids, such as water.

In a preferred embodiment of the invention only a single instrument is utilized. To find the expected light signal in this connection it is advantageous to use a cell including more than one chamber for use in monitoring the light signal transmitted through the medium using the light emitting substance as an external light source.

The method of this invention is readily used in conjunction with apparatus equipped with a microprocessor or computer programmed to automatically carry out the steps of the invention.

Other features and advantages of the present invention will become apparent from the following description of the preferred embodiments of the invention taken in conjunction with the accompanying drawings, which illustrate by way of example the principles of the invention.

Description of the drawings

Fig. 1 is a block diagram of a light detecting system typically used in conjunction with the invention with the light emitting substance admixed in a liquid medium which also includes the material or condition being tested for;

Fig. 2 is a block diagram illustrating a method for monitoring light transmitted through a liquid medium with the light emitting substance separate from the liquid medium;

Fig. 3 is a schematic diagram showing a typical dimensional relationship between a light transmitting medium and a detector for the emitted light signal;

Fig. 4 is a top view of a dual chambered cuvette for use with the method of this invention;

Fig. 5 is a side sectional view taken along line 5—5 of Fig. 4;

Fig. 6 is a top view of a three chambered cuvette for use with the method of the invention;

Fig. 7 is a top view of another dual chambered cuvette for use with the method of invention; and

Fig. 8 is a schematic view illustrating the measurement of light transmitted through a flowing liquid medium according to another embodiment of the invention.

Description of the preferred embodiments

While the following description of the preferred embodiment is limited for convenience to liquid media, it should be clear that, as stated above, the invention can be used in conjunction with gaseous media and test specimens as well such as, for example, the method described in US—A—3,370,175, Jordon et al.

In the preferred form, the method is utilized in connection with the determination of the toxicity of an aqueous sample which also exhibits interfering optical characteristics. The method comprises the steps of forming a suspension of a bioluminescent microorganism in a liquid medium which also contains the sample to be tested. The transmittance $T_a$ of the fluid medium independent of toxicity is then derived by first determining the transmittance $T_c$ of the liquid medium free of the microorganism suspension utilizing a suspension of the same microorganisms in a nonabsorbant, substantially nontoxic liquid as an external light source. The probable transmittance $T_a$ independent of toxicity of the fluid medium containing the suspension of microorganisms is derived from the fluid medium transmittance measurement $T_c$, and the light output of the test sample/microorganism suspension is then measured and compensated by the derived expected transmittance.

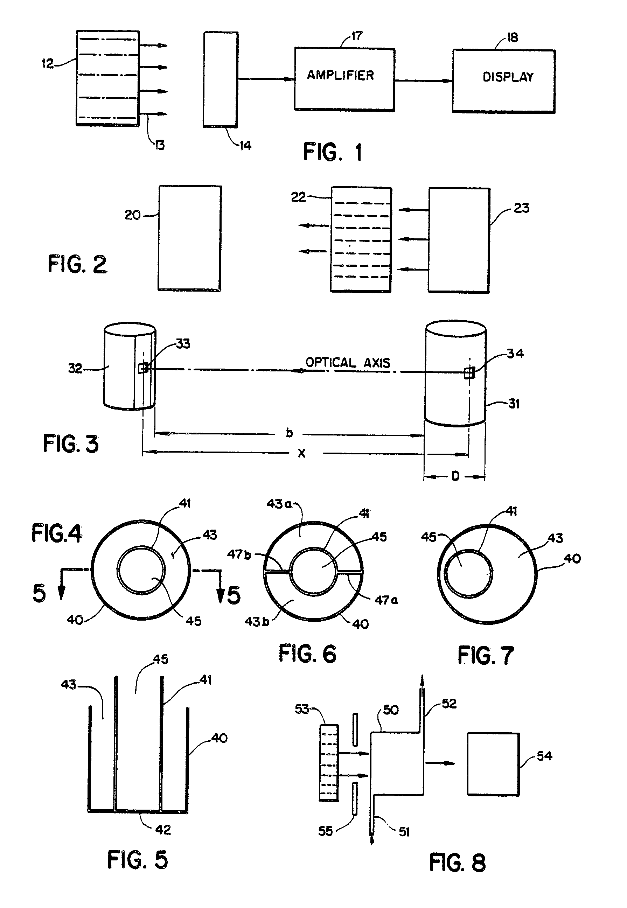

Referring to the drawings, Fig. 1 is a schematic diagram of a photometric system showing a cell 12 containing a liquid medium in which a light emitting substance is disposed along with a test specimen having a property which affects the light output of the light emitting substance and which property is to be measured or monitored by changes of the emitted light signal 13. The test specimen may be the medium itself or a separate substance added to the medium for testing purposes. A light detector 14, for example a photomultiplier tube or a solid state photocell, is positioned in light impinging relationship to the container 12 for generating a signal voltage or current which is relative to the intensity of the emitted light signal impinging on the detector. Although not required, a suitable shutter mechanism, not shown, may be disposed between the container 12 and the detector 14 for selectively interrupting light communication between the container and the detector. The output from the detector 14 is transmitted through an amplifier 17 where the output is amplified and passed on to a display means 18, such as a meter or recorder.

The light emitting substance in the container 12 is affected by the test specimen resulting in a change in the emitted light signal which bears a relationship to the property or characteristic being tested for. Thus, for example, in the case of luminous microorganisms, the toxicity of water can be tested by its effect on the metabolism of the organism which ultimately affects the light output thereof. Likewise, particular materials such as ATP can be determined by chemiluminescent reactions by monitoring the change in the light signal caused by the effect of the test specimen on the chemiluminescent reaction system.

As already mentioned, the liquid medium referred to herein may be composed solely of the test specimen, as in the case of water containing low amounts of toxicants or may include a test specimen mixed, dissolved or suspended in another liquid. For example, highly polluted water can be diluted with demineralized water to reduce the toxicant level for better results. Similarly, solid materials may be tested for toxicity by dissolving or suspending the material in a liquid medium.

Many test specimens and liquids, however, in and of themselves interfere with light transmittance by mechanisms which are not related to the property or characteristic being tested for in the liquid medium. Such light interfering characteristics include media absorbtivity which causes a portion of the light output at the wavelength of the light emitting substance to be absorbed. This property can normally be anticipated by the fact that the test specimen or medium is colored. Another likely source of light interference is scattering due to the presence of particles in the test specimen. Filtering the test specimen is usually not an answer to this problem since removal of the particles oftentimes results in falsely lowering the results, particularly in the case where polluted or toxic water is being tested.

Referring to Fig. 2 there is illustrated schematically an instrument set up to carry out the method of the invention, wherein an instrument having a light detector 20 is utilized to measure the light signal transmittance through a suitable container 22 containing a liquid medium incorporating the test specimen but without any light emitting substance. The light emitting substance in suitable liquid form, i.e., as a suspension of microorganisms or a solution of reactants capable of luminous reaction in the fluid medium, is placed in a separate container 23, in alignment with the light detector 20 and the liquid medium container for transmission of a light signal through the sample container 22 to the light detector.

In accordance with the preferred form of the method of this invention, the light signal from the container 23 containing the light-emitting substance is first monitored with the container 22 in place but containing a nonabsorbing reference fluid such as air or water (and no test specimen). The nonabsorbing fluid in container 22 is then replaced by a liquid medium including the test specimen and the light signal again monitored. The ratio of the second reading to the first reading, hereinafter called $T_c$, is the transmittance of the media and test specimen free of the light emitting substance over the wavelength region of the light emitting substance using an external light source, preferably the light emitting substance itself.

During testing, the light emitting substance is actually disposed within the liquid medium along with the test specimen. The transmittance of the mixture of the medium and the light emitting substance is referred to as the probable transmittance ($T_a$). $T_a$ may be viewed as an attenuation coefficient which reduces the light reaching the detector. In accordance with the invention $T_c$ is used to compute $T_a$, but other factors such as the differences in light paths, the differences in geometry of the two test cells and other factors due to the intermixing of the light emitting substance and the medium must also be considered in determining $T_a$.

The above factors are considered in the following manner. As shown schematically in Fig. 3, a cuvette 31, defining a dimension D in the direction of a light detector 32 and containing a mixture of the test specimen and light emitting substance, is disposed in a suitable photometer a distance b from the light detector. Photons making up the light signal must travel a maximum distance D+b and a minimum distance b to the detector 32. Since the effect on the light signal by the medium occurs only while the photons travel through the medium, the effect of the medium on the light signal is maximum for photons traveling the maximum distance D through the medium. In deriving an expression for $T_a$ of the medium, only photons from a volume element 34 of volume dV passing through the medium a distance x−b and traveling a distance x in a path parallel to the optical axis of the light source and the detector 32 to impinge on a small area 33 of the detector (equal to the area of the volume element 34) are considered.

The Lambert-Beer law applies to transmittance of light through a medium and is stated as follows:

$$T=\frac{P}{P_o}=e^{-Ac(x-b)} \qquad (1)$$

where T is transmittance, $P_o$ is the radiant power transmitted by the light emitting substance through an optically nonabsorbing fluid;

P is the radiant power transmitted by the light emitting substance through the test medium;

A is the specific absorbtion coefficient of the interfering substance in the medium per unit concentration per unit path length;

c is the concentration of the interfering substance in the medium;

(x−b) is the path length traveled by a photon through the medium; and

e is the base of a natural log.

For the present derivation P and $P_o$ may be replaced by their differentials dP and $dP_o$ which may be further expressed as:

$$dP_o=S\ dA\ dx \qquad (2)$$

where S is the source intensity per unit volume of the mixture of test specimen and light emitting substance, dA is the cross sectional area of the volume element 34 being considered, and dx is the length of column element 34. $dP_o$ is the light falling on detector area element 33 due to photons emitted from the part of volume element 34 located at x.

The detector, of course, detects emissions not only from volume element 34 but also detects the integrated emissions in its direction from all volume elements within the total volume of the medium. However, as already mentioned, only the single volume element 34 is considered here to simplify the discussion. The total light, $P_o$, from a volume having length D and area dA falling on detector element 33, may be obtained by integrating equation (2) over the interval x=b to x=b+D. The result is:

$$P_o=(S\ dA)\ D \qquad (3)$$

Similarly, using the Lambert-Beer law, when an interfering substance is present, the light falling upon 33 from the same total volume D(dA) may be calculated by integration to obtain:

$$P=(S\ dA)\ \int_{b}^{D+b} e^{-Ac(x-b)}dx$$

$$=\frac{S\ dA}{Ac}(1-e^{AcD.}) \qquad (4)$$

$T_a$ of the medium is then defined as the ratio of P to $P_o$ or, from equations (3) and (4),

$$T_a = \frac{1 - e^{-AcD}}{AcD} \qquad (5)$$

Equation (5) can also be factored into a form which is more convenient for purposes of illustration:

$$T_a = e^{\frac{-AcD}{2}} \; \frac{\sinh \frac{AcD}{2}}{\frac{AcD}{2}} \qquad (6)$$

In accordance with Beer's law the following relationship exists with regard to the measured value of transmittance of the medium, $T_c$.

$$-\ln T_c = Ac_o D_o \qquad (7)$$

$D_o$ equals the mean absorption path length for photon travel from all volume elements in the cell used for the $T_c$ test measurement to all photodetector area elements, and $c_o$ equals concentration. Solving for A:

$$A = \frac{-\ln T_c}{c_o D_o} \qquad (8)$$

Using equation (6) and the relationship developed in equations (7) and (8) for $T_c$, the transmittance $T_a$ due to interfering characteristics of the test sample for any concentration c can be calculated in accordance with the following:

$$T_a = e^{(\frac{c}{c_o}\frac{D}{D_o}\ln T_c)} \; \frac{\sinh (\frac{-c}{-c_o}\frac{D}{D_o}\ln T_c)}{\frac{-c}{c_o}\frac{D}{D_o}\ln T_c} \qquad (9)$$

where $c_o$ and $D_o$ respectively represent the concentration and the mean path length from all volume elements of the total volume to all detector area elements in the cell in which the reading is taken with the light emitting substance separate from the test specimen and c and D are the concentration and mean path respectively for the liquid medium admixed with the light emitting substance in the test cell. To avoid the necessity for determining $T_a$ for each of the possible path lengths in the cells to arrive at the mean path lengths D and $D_o$, respectively, it is preferred to empirically determine $D/D_o$ for the combination of the test cell, the cell used to determine $T_c$ and the instrument or instruments used for the test. Since both of the mean path lengths are merely functions of geometry the determination of $D/D_o$ need only be made once for any given combination of cell and instrument configurations and the ratio of mean path lengths $D/D_o$ for that combination can be determined and used as a constant in determining $T_a$ for any interfering substance which obeys the Lambert-Beer law.

The ratio $D/D_o$ can be determined empirically by utilizing a medium which has optical interfering characteristics but which is substantially nonreactive with the light emitting substance with respect to the property being measured. For example when luminous microorganisms are used as the light emitting substance for the detection of toxic substances in water, the ratio $D/D_o$ can be determined using a substantially non-toxic material which absorbs over the wavelength of the light emitting substance, such as a known concentration of food coloring, to prepare a substantially non-toxic medium having interfering optical characteristics. The transmittance of the prepared medium $T_o$ is determined as described above with the light emitting substance disposed externally of the medium.

The transmittance of the sample due to toxicity $(T_t)$ is determined from the following expression:

$$T_t = \frac{T_x}{T_a} \qquad (10)$$

where $T_x$ is the observed transmittance from the cell containing a light emitting substance and the test specimen admixed. Transmittance of the prepared medium/light emitting substance mixture in the test cell is measured to determine $T_x$. In the case of a non-toxic food color, $T_t$ will be unity, making the observed transmittance $T_x$ equal to $T_a$, from equation (10). A value of $D/D_o$ may then be found which makes the observed value $T_x$ equal to $T_a$ as calculated from equation (9).

While from the foregoing discussion it can be seen how $T_a$ is determined, the step by step calculations can be time consuming and tedious. According to another embodiment of the invention, $T_c$ is converted to absorbance by a graph which is a plot of absorbance, $A_o$ versus ln $T_c$. To obtain the absorbance at other concentrations, c, $A_o$ is multiplied by $c/c_o$.

Converting equation (9) to terms of absorbance, using

$$A_c = (-\ln T_c)(c/c_o)$$

and by substituting this value of $A_c$ in equation (9), a simplified expression for the determination of $T_a$ is obtained:

$$T_a = e^{(-A_c\frac{D}{D_o})} \; \frac{\sinh A_c\frac{D}{D_o}}{A_c\frac{D}{D_o}} \qquad (11)$$

$T_a$ is read directly from a plot of $T_a$, as defined by equation (11) versus $A_c$ $D/D_o$. Since $D/D_o$ is a geometrical constant, it is preferably included as a scaling factor in making the graph. Each value of $T_a$ may be read directly from such a graph using $A_c$ without multiplying by $D/D_o$.

It will be seen that obtaining transmittance $T_c$ can be a problem in light measuring instruments that are designed to only accommodate a single cell in the instrument at a given time for the measurement of the emitted light signal, an example of which is illustrated in Fig. 1. To adapt such instruments for measurement of $T_c$ where the light emitting substance is a light source separate from the test specimen such as shown in Fig. 2 would require a substantial modification of the instrument and additional expense. Although as mentioned a separate instrument can be utilized to measure the absorbance of the test specimen as a function of wavelength, this requires either very complicated mathematical computations or development of a light source which duplicates the wavelength of the chemiluminescent or bioluminescent light emitting substance. The use of different instruments also makes determination of $T_a$ much more difficult because of differences between instruments, and the light detectors, cell geometries and the like, all of which can affect transmittance and must be accounted for in the determination of $T_a$. A cell for measuring $T_c$ is therefore provided comprising a multi-chambered container for maintaining the light emitting substance separate from the test specimen for use in the single cell holder of a conventional photometer, such as that illustrated in Fig. 1.

Referring to Figs. 4 and 5, a bi-chambered cell is illustrated which comprises an outer tube 40 and a smaller diameter tube 41 disposed concentrically within the outer tube. One end of each of the tubes 40 and 41 is joined at a common bottom wall 42 so as to define an outer annular chamber 43 and an inner chamber 45. The opposite ends of the tubes are open for communication with the chambers 43 and 45.

In measuring $T_c$ utilizing the bi-chambered cell, the light emitting substance is normally disposed in the central chamber 45 and the outer chamber 43 is provided with a non-light absorbing fluid. Initial reading of the light output is then taken and the non-absorbing fluid replaced with a liquid medium including the test specimen and a second reading is taken. The ratio of the second to the first reading is the $T_c$ for the test specimen.

It is preferred that the length of the smaller diameter tube 41 be somewhat greater than the outer tube 40 so that the upper end extends beyond the outer tube end for ease of handling. However, this is not essential particularly in the case where it may be desired to put a closure on the cell to seal the open end. It should also be noted that while the cell illustrated in Figs. 4 and 5 is cylindrical in plan configuration, the cell may have other cross-sectional configurations such as rectangular or square, depending on the type of instrument for which it is designed to be used. The dimensions of the cell are governed to a large extent by the nature of the instrument being used for the measurement of the light signal. Preferably, the diameter of the outer tube 40 is twice that of the diameter of the inner tube 41 to simplify calculations. The cell may be constructed of any suitable transparent material such as glass, or plastic materials such as polyethylene, polypropylene and the like.

It should also be noted that the sample cell for measuring $T_c$ is not limited to concentric chambers. Thus, for example, the inner tube 41 of Figs. 4 and 5 need not be concentric with the outer tube but may be located adjacent a wall of the outer tube so that the inner chamber 45 is eccentric with respect to the axis of the outer chamber 43, such as illustrated in Fig. 7 wherein like reference characters refer to like parts as in Figs. 4 and 5. Such an arrangement is particularly useful where it may be desirable to reduce the effective path length to a minimum, as when determining $T_c$ for highly turbid materials.

Referring to Fig. 6, the outer chamber 43 of the cell of Figs. 4 and 5 is further divided into two chambers 43a and 43b by walls 47a and 47b extending through the interior of outer tube 40 to the inner tube 41. The provision of the two outer chambers permits the medium and a non- absorbing fluid to be placed in separate outer chambers at the same time so that transient changes in temperature are eliminated and the time lost while refilling the outer chamber 43 with media is avoided. To obtain initial and final light output to determine $T_c$, the cell of Fig. 6 need only be rotated to first place the non-absorbing fluid in one of the outer chambers between the source and the light detector, and then to place the absorbing media in the other outer chamber between the source and the detector. This type of cuvette can also be mechanically rotated to provide a "chopped" light signal.

The method of the present invention can be applied to continuous automated processing. As illustrated in Fig. 8, the present invention can be utilized in connection with a flow through cell 50 provided with an inlet passage 51 and outlet passage 52. Cell 50 is disposed between a sample cell 53 and a light detector 54. A shutter 54 is provided to interrupt light communication between cells 50 and 53. The light detector 54 is in electrical communication with a conventional microprocessor, not shown, for communicating a signal responsive to light emitted to the microprocessor. In using the flow through cell 50 in accordance with the present invention, several operational modes are possible. For example, light emitting substance can be placed in cell 53 and a non-light absorbing liquid caused to flow through the cell 50. This is followed by passage through the cell 50 of the test specimen and the ratio of the two readings determined to find $T_c$. Shutter 54 is then moved into its closed position and a mixture of light emitting substance and test specimen is caused to flow through the cell 50 and the light signal therefrom monitored and compensated for the optical interference of the fluid medium.

While determination of $T_c$ has been described as being determined by the ratio of transmittance of the light emitting substance through the test medium to that through a nonabsorbing fluid, it should also be clear that $T_c$ can be determined by the ratio of the light signal emanating from a mixture of light emitting substance and the test medium through a separate volume of the test specimen alone to the light signal from the same mixture through a non-absorbing fluid. This ratio provides $T_c$ in the same manner as described above and may be preferably used in those situations where the light emitting substance is in short supply, or simply for operational convenience in automated instruments. Similarly, shutter 55 may be eliminated when the mixture of light emitting substance and test specimen is contained in the cell 53 and the chamber 50 contains alternately non-absorbing fluid, then test specimen, in a predetermined test sequence. Similarly, any of the well known means of determining the ratio of signals for light through an absorbing and a reference chamber, such as chopping, rotating mirrors, etc., may be employed.

Further modifications will be apparent to those skilled in the art. Such modifications are included within the scope of this invention as defined by the following claims.

## Claims

1. A method of measuring the light output from a mixture of a fluid test medium and a light emitting substance responsive to the presence of a component or a condition of said fluid test medium to produce a change in the light output of said light emitting substance representative of the quantity of said component or characteristics of said condition, said mixture being present in a first container, characterized by compensating the measured output $T_x$ for errors due to attenuation or scattering of said light passing through said fluid test medium, in which said compensation is performed by:—

(a) passing light from a source comprising at least said light emitting substance through a second container containing only a non-absorbing reference fluid and measuring the transmitted light;

(b) passing light from said source through said second container containing a known concentration of only said fluid test medium and measuring the transmitted light;

(c) taking the ratio of said measurements of transmitted light to obtain a representation of the transmittance $T_c$ of the fluid test medium;

(d) deriving a representation of the probable transmittance $T_a$ of the mixture of light emitting substance and fluid test medium using the equation:—

$$T_a = e^{\left(\frac{c\ D}{c_o\ D_o}\ln T_c\right)}\ \frac{\sinh\left(\frac{-c\ D}{c_o\ D_o}\ln T_c\right)}{\frac{-c\ D}{c_o\ D_o}\ln T_c}$$

or the equation:—

$$T_a = e^{-A_c\frac{D}{D_o}}\ \cdot\ \frac{\sinh A_c\frac{D}{D_o}}{A_c\frac{D}{D_o}}$$

where $c_o$ is a known concentration of the fluid test medium employed in step (b), c is a known concentration of the fluid test medium in said mixture of fluid test medium and light emitting substance, $D_o$ is the mean absorption path length through the fluid test medium present in said second container in step (b), D is the mean absorption path length through said mixture in said first container and

$$A_c = (-\ln T_c)(C/C_o);$$

and

(e) using said derived representation of $T_a$ to compensate said measured light output $T_x$ via the formula $T_t = T_x/T_a$, wherein $T_t$ is the compensated transmittance of said mixture.

2. The method of claim 1 wherein said light emitting substance is capable of undergoing a chemical or biological reaction in the mixture responsive to the presence of said substance or condition in said medium to provide a measurable change in the light signal emitted therefrom.

3. The method of claim 1 wherein said light emitting substance comprises luminous micro-organisms.

4. The method of claim 1 wherein said fluid test medium is a liquid.

5. The method of claim 1 wherein said fluid medium is water suspected of containing a toxic substance or condition and said light emitting substance comprises a suspension of luminous micro-organisms.

6. A method as claimed in claim 1, in which the light source comprises a mixture of said light emitting substance and said fluid test medium.

7. The method of claim 1 wherein:

(a) said light emitting substance is a bioluminescent micro-organism;

(b) said fluid test medium is a liquid;

(c) said source is a mixture of said bioluminescent micro-organisms and a liquid medium which is substantially non-absorbent and substantially inert with respect to its effect on the light output of said bioluminescent organisms.

**Patentansprüche**

1. Verfahren zur Messung der Licht-Ausgangsgröße von einem Gemisch aus einem Test-Strömungsmedium und einer lichtemittierenden Substanz, welche auf das Vorliegen einer Komponente oder eines Zustands des Testströmungsmediums unter Erzeugung einer die Menge der genannten Komponente oder Kenneigenschaften des genannten Zustands wiedergebenden Änderung in der Lichtausgangsgröße der lichtemittierenden Substanz anspricht, wobei das Gemisch in einem ersten Behälter vorliegt, dadurch gekennzeichnet, daß man die gemessene Ausgangsgröße $T_x$ bezüglich Fehlern infolge einer Schwächung oder Streuung des das genannte Testströmungsmittel durchsetzenden Lichts kompensiert, wobei man zur Durchführung dieser Kompensation

(a) Licht von einer wenigstens die genannte Lichtemittierende Substanz umfassenden Lichtquelle durch einen zweiten, nur ein nicht-absorbierendes Bezugsströmungsmittel enthaltenden Behälter hindurchleitet und das durchgelassene Licht mißt;

(b) Licht von der genannten Quelle durch den genannten zweiten Behälter, der eine bekannte Konzentration lediglich des Testströmungsmediums enthält, hindurchleitet und das durchgelassene Licht mißt;

(c) das Verhältnis der genannten Meßwerte von durchgelassenem Licht bildet, um eine die Transmittanz (Durchlässigkeit) $T_c$ des Testströmungsmediums wiedergebende Größe zu erhalten;

(d) eine die wahrscheinliche Transmittanz $T_a$ des Gemischs aus Licht emittierender Substanz und Testströmungsmedium wiedergebende Größe ableitet unter verwendung der Beziehung:

$$T_a = e^{\left(\dfrac{c}{c_o}\dfrac{D}{D_o}\ln T_c\right)} \cdot \dfrac{\sinh\left(\dfrac{-c}{c_o}\dfrac{D}{D_o}\ln T_c\right)}{\dfrac{-c}{c_o}\dfrac{D}{D_o}\ln T_c}$$

oder der Beziehung:

$$T_a = e^{-A_c\frac{D}{D_o}} \cdot \dfrac{\sinh A_c\dfrac{D}{D_o}}{A_c\dfrac{D}{D_o}}$$

wobei $c_o$ eine bekannte Konzentration des in Verfahrensschritt (b) verwendeten Testströmungsmediums, c eine bekannte Konzentration des Testströmungsmittels in dem genannten Gemisch aus Testströmungsmedium und lichtemittierender Substanz, $D_o$ die mittlere Absorptionsweglänge durch das in dem zweiten Behälter in Verfahrensschritt (b) vorliegende Test- strömungsmedium, D die mittlere Absorptionsweglänge durch das Gemisch in dem ersten Behälter und

$$A_c = (-\ln T_c)(C/C_o)$$

sind; und

(e) die so abgeleitete, $T_a$ wiedergebende Größe zur Kompensation der gemessenen Lichtausgangsgröße $T_x$ nach der Beziehung $T_t = T_x/T_a$ verwendet, worin $T_t$ die kompensierte Transmittanz des genannten Gemischs ist.

2. Verfahren nach Anspruch 1, wobei die genannte Lichtemittierende Substanz in Abhängigkeit von dem Vorliegen der genannten Substanz oder des genannten Zustands in dem Medium eine chemische oder biologische Reaktion in dem Gemisch erfahren kann, um eine meßbare Änderung in dem daraus emittierten Lichtsignal herbeizuführen.

3. Verfahren nach Anspruch 1, wobei die genannte lichtemittierende Substanz lumineszenzmikroorganismen umfaßt.

4. Verfahren nach Anspruch 1, wobei das Testströmungsmedium eine Flüssigkeit ist.

5. Verfahren nach Anspruch 1, wobei das Strömungsmedium Wasser mit einem vermuteten Gehalt einer toxischen Substanz oder eines toxischen Zustands ist und die Lichtemittierende Substanz eine Suspension von Lumineszenzmikroorganismen umfaßt.

6. Verfahren nach Anspruch 1, bei welchem die Lichtquelle ein Gemisch aus der genannten lichtemittierenden Substanz und dem genannten Testströmungsmedium umfaßt.

7. Verfahren nach Anspruch 1, bei welchem

(a) die genannte lichtemittierende Substanz ein Biolumeszenz-Mikroorganismus ist,

(b) das genannte Testströmungsmittel eine Flüssigkeit ist,

(c) die genannte Lichtquelle ein Gemisch aus den genannten Biolumineszenz-Mikroorganismen und einem flüssigen Medium ist, das im wesentlichen nicht absorbiert und im wesentlichen inert bezüglich seiner Auswirkung auf die Lichtausgangsgröße der Biolumineszenz-Organismen ist.

**Revendications**

1. Méthode pour mesurer la lumière à la sortie d'un mélange d'un milieu d'essai fluide et d'une substance photo-émettrice en réponse à la présence d'un composant ou d'une condition dudit milieu fluide pour produire un changement de la lumière à la sortie de ladite substance photo-émettrice représentatif de la quantité dudit composant ou des caractéristiques de ladite condition, ledit mélange étant présent dans un premier récipient, caractérisée en ce qu'on compense la sortie mesurée Tx, pour des erreurs dues à l'atténuation ou à la dispersion de ladite lumière traversant ledit milieu d'essai fluide, où ladite compensation est accomplie par:

(a) passage de la lumière d'une source comprenant au moins ladite substance photo-émettrice à travers un second récipient ne contenant qu'un fluide non absorbant de référence et mesure de la lumière transmise;

(b) passage de la lumière de ladite source à travers ledit second récipient contenant une concentration connue uniquement dudit milieu d'essai fluide et mesure de la lumière transmise;

(c) prise du rapport desdites mesures de lumière transmise pour obtenir une représentation de la transmittance $T_c$ du milieu d'essai fluide;

(d) dérivation d'une représentation de la transmittance probable $T_a$ du mélange de la substance photo-émettrice et du milieu d'essai fluide en utilisant l'équation:

$$T_a = e^{\left(\frac{c\ D}{c_o\ D_o} \ln T_c\right)} \frac{\sinh\left(\frac{-c\ D}{c_o\ D_o} \ln T_c\right)}{\frac{-c\ D}{c_o\ D_o} \ln T_c}$$

ou l'équation:

$$T_a = e^{-A_c \frac{D}{D_o}} \cdot \frac{\sinh A_c \frac{D}{D_o}}{A_c \frac{D}{D_o}}$$

où $c_o$ est une concentration connue du milieu d'essai fluide employé à l'étape (b), c est une concentration connue du milieu d'essai fluide dans ledit mélange du milieu d'essai fluide et de la substance photo-émettrice, $D_o$ est la longueur de la trajectoire d'absorption moyenne à travers le milieu d'essai fluide présent dans ledit second récipient à l'étape (b), D est la longueur du trajet d'absorption moyenne à travers ledit mélange dans ledit premier récipient et

$$A_c = (-\ln T_c)(C/C_o);$$

et

(e) l'utilisation de ladite représentation dérivée de $T_a$ pour compenser ladite lumière mesurée de sortie $T_x$ par la formule $T_t = T_x/T_a$ où $T_t$ est la transmittance compensée dudit mélange.

2. Méthode selon la revendication 1 où ladite substance photo-émettrice est capable de subir une réaction chimique ou biologique dans le mélange en réponse à la présence de ladite substance ou condition dans ledit milieu pour produire un changement mesurable du signal de lumière qui en est émis.

3. Méthode de la revendication 1 où ladite substance photo-émettrice comprend des micro-organismes lumineux.

4. Méthode de la revendication 1 où ledit milieu d'essai fluide est un liquide.

5. Méthode de la revendication 1 où ledit fluide est de l'eau suspectée de contenir une substance toxique ou condition et ladite substance photo-émettrice comprend une suspension de micro-organismes lumineux.

6. Méthode de la revendication 1 où la source de lumière comprend un mélange de ladite substance photoémettrice et dudit milieu d'essai fluide.

7. Méthode de la revendication 1 où

(a) ladite substance photo-émettrice est un micro-organisme bioluminescent;

(b) ledit milieu d'essai fluide est un liquide;

(c) ladite source est un mélange desdits micro-organismes bioluminescents et d'un milieu liquide qui est sensiblement non absorbant et sensiblement inerte relativement à son effet sur la lumière à la sortie desdits organismes bio-luminescents.

FIG. 1

FIG. 2

FIG. 3

FIG.4

FIG. 6

FIG. 7

FIG. 5

FIG. 8